Europäisches Patentamt

(19) European Patent Office

Office européen des brevets

(11) Numéro de publication: **0 083 034**
**A1**

(12) ## DEMANDE DE BREVET EUROPEEN

(21) Numéro de dépôt: **82111675.3**

(22) Date de dépôt: **16.12.82**

(51) Int. Cl.³: **G 04 C 13/11**
**H 02 K 37/00**

(30) Priorité: **18.12.81 CH 8108/81**

(43) Date de publication de la demande:
**06.07.83 Bulletin 83/27**

(84) Etats contractants désignés:
**DE FR GB**

(71) Demandeur: **Omega SA**
**Rue Stämpfli 96**
**CH-2500 Bienne(CH)**

(72) Inventeur: **Mokdad, Mohamed**
**Rue du Jura 48**
**CH-2503 Bienne(CH)**

(74) Mandataire: **de Raemy, Jacques et al,**
**SSIH Management Services S.A. Service des Brevets**
**Rue Stämpfli 96**
**CH-2500 Bienne(CH)**

(54) **Micromoteur pas à pas à deux sens de rotation.**

(57) Le micromoteur pas à pas (1) est équipé d'un dispositif magnétomécanique (11) pour inverser le sens de rotation de son rotor (2). Quand l'élément magnétique (12) est en retrait ou affleure l'entrefer (3), le rotor tourne dans le sens indiqué par la flèche (27). Quand le même élément magnétique est projeté à l'intérieur de l'entrefer par suite d'une pression manuelle exercée sur le poussoir (14), le rotor tourne dans le sens opposé à celui figuré par la flèche (27). Le dispositif est utilisé notamment pour corriger l'heure affichée par une pièce d'horlogerie équipée d'aiguilles indicatrices.

FIG. Ia

EP 0 083 034 A1

Croydon Printing Company Ltd.

## Micromoteur pas à pas à deux sens de rotation

L'invention est relative à un micromoteur rotatif pas à pas pour pièce d'horlogerie comprenant un noyau magnétique, une bobine entourant ce noyau, un stator couplé magnétiquement audit noyau, ledit stator comportant deux pièces polaires séparées ou faites d'une pièce, un rotor aimanté embrassé par les pièces polaires et présentant au moins une paire de pôles diamétralement opposées, un entrefer séparant lesdites pièces polaires dudit rotor et un dispositif magnéto-mécanique pour inverser le sens de rotation du rotor.

On connaît déjà des micromoteurs équipés de dispositifs magnéto-mécaniques pour inverser le sens de rotation du rotor.

Le brevet DE 1 006 806 décrit un moteur pas à pas qui est muni d'une bride en forme de U solidaire du stator. Les figures 5 et 5a de ce brevet montrent que les branches de la bride plongent dans une rainure pratiquée dans les pôles en fer doux du rotor. Si l'on fait tourner la bride de 90°, on inverse le sens de rotation du rotor. Outre le fait que cette construction ne suggère aucun moyen de manoeuvre de la bride, on comprendra qu'elle ne convient pas à un moteur pas à pas de montre où le rotor est réalisé d'une pièce avec un aimant circulaire.

Pour sa part, le brevet CH 613 349 expose un moteur pas à pas pour montre susceptible de tourner dans les deux sens suivant la position d'un élément magnétique monté pivotant sur un des bâtis qui portent le rotor du moteur. La construction proposée a l'inconvénient de prendre beaucoup de place en épaisseur et de nécessiter un renvoi si l'on veut transformer le mouvement de rotation de l'élément en mouvement longitudinal d'une tige de commande manuelle.

C'est le but de la présente invention de palier les inconvénients ci-dessus exposés et de proposer une construction bien adaptée à une pièce d'horlogerie de petit volume pour inverser le sens de rotation de son moteur d'entraînement dans laquelle les moyens pour y parvenir apparaissent dans les revendications.

L'invention sera comprise maintenant à la lumière de la description qui suit et des dessins qui l'illustrent et qui donnent un exemple d'une forme d'exécution dans laquelle :

La figure 1a est une vue en coupe du dispositif pour inverser le sens de rotation du rotor selon l'invention, ledit dispositif se trouvant dans sa position de repos.

La figure 1b est une vue en coupe selon l'axe A - A de la figure 1a.

La figure 2 est une vue en coupe du dispositif pour inverser le sens de rotation du rotor selon l'invention, ledit dispositif se trouvant dans sa position de travail.

La figure 3 est un diagramme donnant divers couples de positionnement du moteur en fonction de l'angle de rotation du rotor.

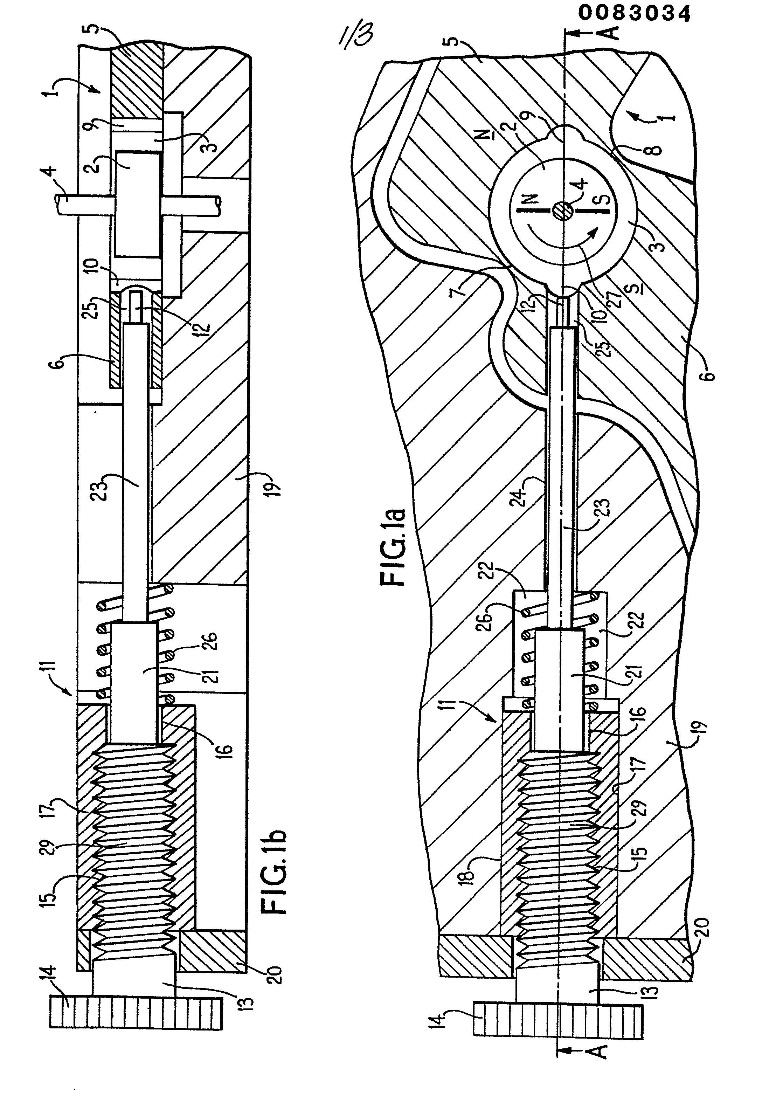

Les figures 1a et 1b montrent une vue partielle du moteur 1 de la pièce d'horlogerie. Le rotor 2 est formé d'un aimant permanent dont la direction d'aimantation est diamétrale pour former une paire de pôles N - S. Ce rotor tourne autour de l'axe 4 qui pivote sur des paliers non représentés. Embrassant le rotor, on trouve un stator comprenant deux pièces polaires 5 et 6 reliées par des isthmes ou zones saturables 7 et 8. Un noyau magnétique portant une bobine (non représentés sur la figure) est couplé magnétiquement au stator comme cela est connu de l'art antérieur. Le rotor 2 est séparé des pièces polaires 5 et 6 par un entrefer 3 qui se présente, dans l'exemple montré aux figures 1a et 1b, sous la forme d'un espace circulaire dans lequel ont été aménagées deux encoches 9 et 10 pratiquées dans le bord intérieur des pièces polaires statoriques. La construction qui vient d'être décrite est suffisamment connue pour qu'il ne soit pas nécessaire d'y apporter d'autres commentaires.

Selon l'invention, le micromoteur comprend en outre un dispositif 11 destiné à inverser le sens de marche du rotor et qui va être décrit maintenant. Il comporte essentiellement un élément en matière ferro-magnétique 12 qui peut pénétrer dans l'entrefer 3 en réponse à l'actionnement d'un organe de commande 13 accessible de l'extérieur de la pièce d'horlogerie. Comme on le voit sur les figures 1a et 1b, l'organe de commande 13 comporte une tige pouvant coulisser dans le sens de sa longueur qui supporte à sa première extrémité l'élément magnétique 12 et à sa seconde extrémité une couronne-poussoir 14 sur laquelle peut s'exercer l'action du doigt.

Selon l'exécution présentée aux figures, la partie 29 de la tige comprend un filet 15 qui vient visser sur le taraudage 16 d'un élément de butée 17. Cet élément de butée coulisse dans une ouverture 18 pratiquée dans la platine 19 et est retenu par une plaquette d'arrêt 20. Un ressort de rappel 26 coiffe la partie 21 de la tige et s'appuye d'un côté sur le fond d'une cavité 22 pratiquée dans la platine et de l'autre côté sur l'élément de butée 17. La partie 23 de la tige est engagée dans une première ouverture 24 présentée par la platine et dans une seconde ouverture 25 pratiquée dans la pièce polaire statorique 6. Comme on peut le voir sur les figures 1a et 1b, cette ouverture 25 donne accès à l'entrefer 3 par le fond de l'encoche 10.

Lorsqu'aucune pression n'est exercée sur le poussoir 14, l'élément de butée 17 vient s'appuyer contre la plaquette d'arrêt 20 rappelé qu'il est par le ressort 26. La tige est en position de repos et l'élément magnétique 12 est légèrement en retrait de l'entrefer. Le moteur se comporte alors comme un moteur normal connu. La position de repos entre les impulsions est indiquée par la direction N-S. Si une impulsion de commande est envoyée à la bobine du moteur et que sa polarité est arrangée pour que la pièce polaire 5 présente un pôle Nord et que la pièce polaire 6 présente un pôle Sud, le rotor tournera de 180° dans le sens de la flèche 27. A la prochaine impulsion, les noms des pièces polaires seront inversés et le rotor tournera à nouveau de 180° pour retrouver la place qui est montrée en figure 1a.

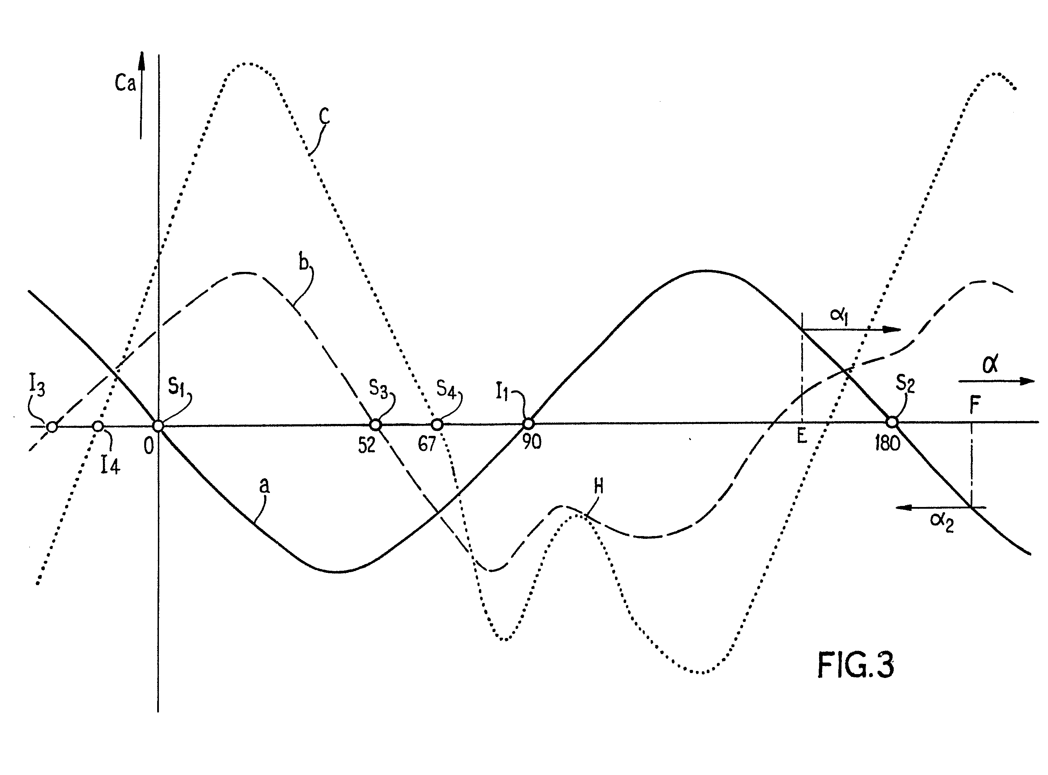

Cette situation est illustrée par la courbe a montrée en figure 3. Dans ce diagramme est représenté le couple de positionnement Ca du rotor en fonction de son angle de rotation $\alpha$. Pour la construction donnée en exemple, les positions d'équilibre stable sont données par les points $S_1$ et $S_2$ situés respectivement à environ 0° et 180°. La position d'équilibre instable est donnée par le point $I_1$ qui, pour le moteur pris en exemple, se situe à un angle $\alpha$ d'environ 90°. Pour la courbe a comme d'ailleurs pour les autres courbes illustrées sur le graphique de la figure 3, le point d'équilibre stable se trouve toujours à l'endroit où les courbes coupent l'axe des abscisses et présentent en même temps une pente négative. Ainsi, pour la courbe a, si l'on déplace le rotor en arrière de $S_2$ à E, il reviendra de lui-même en $S_2$, de même si on le déplace en avant de $S_2$ à F, il reviendra aussi de lui-même en $S_2$ comme le montrent les flèches $\alpha_1$ et $\alpha_2$.

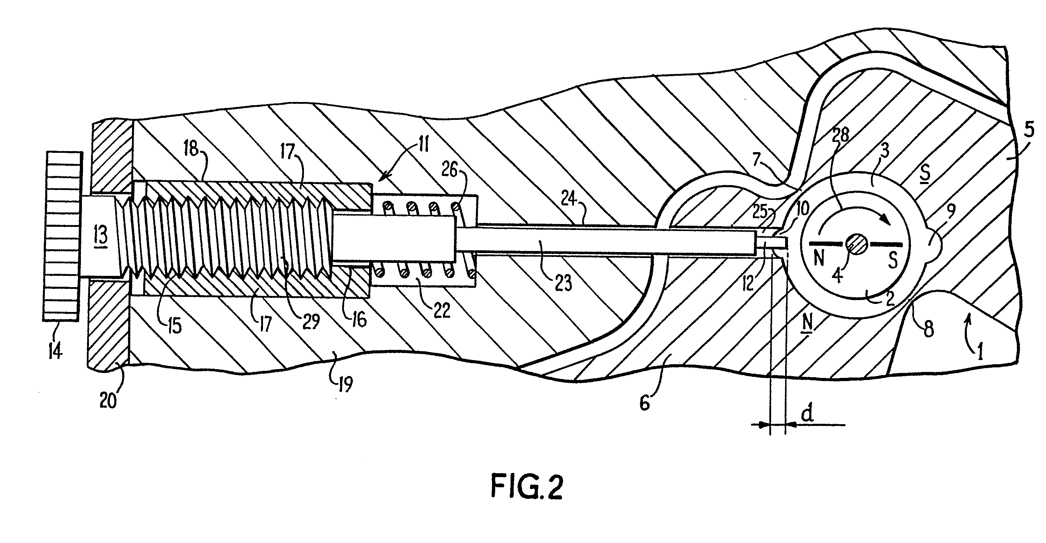

On va considérer maintenant la situation où l'on exerce une pression sur le poussoir 14, situation qui est illustrée par la figure 2. Dans ce cas, l'élément de butée 17 vient s'appuyer sur le fond de l'ouverture 18 contre la force de rappel du ressort 26. La tige est en position de travail et l'élément magnétique 12 pénètre dans l'entrefer 3 par le fond de l'encoche 10. La longueur de cette pénétration est symbolisée par la lettre d . A ce moment, la configuration de réluctance du circuit magnétique comprenant le stator et l'aimant du rotor est modifiée et le rotor prend la position théorique illustrée par la direction N – S de l'aimant, comme on peut le voir en figure 2. Cette position théorique est décalée de 90° par rapport à celle présentée en figure la. Si une impulsion de commande est envoyée alors à la bobine du moteur et que sa polarité est arrangée pour que la pièce polaire 5 présente un pôle Sud et que la pièce polaire 6 présente un pôle Nord, le rotor tournera de 180° dans le sens de la flèche 28 c'est-à-dire en direction opposée à celle qu'on avait quand la tige était en position de repos. A la prochaine impulsion de polarité inverse, le rotor tournera à nouveau de 180° pour retrouver la place qui est montrée en figure 2.

La situation théorique présentée en figure 2 est illustrée par les résultats pratiques de mesures effectuées sur un moteur objet de l'invention et qui apparaissent en figure 3. Ces résultats sont donnés dans les courbes b et c pour des longueurs de pénétration d différentes de l'élément magnétique 12. Dans le moteur considéré, la courbe b a été relevée pour une longueur d de 0,18 mm et la courbe c pour une longueur d de 0,23 mm, alors que la courbe a est celle déjà discutée plus haut et pour laquelle la longueur d est égale à 0.

Sur la figure 3, la courbe b présente une position d'équilibre stable $S_3$ pour $\alpha = 52°$ alors que la courbe c présente sa position d'équilibre stable $S_4$ pour $\alpha = 67°$, les points d'équilibre instables étant figurés en $I_3$ et $I_4$. Les courbes b et c présentent en H des accidents dus à la non-symétrie de l'entrefer 3. On notera que, sans avoir été particulièrement recherchée, cette configuration accidentelle est favorable au fonctionnement du moteur puisqu'elle diminue l'amplitude du couple de positionnement Ca abaissant ainsi l'énergie nécessaire à fournir à la bobine pour faire avancer le rotor. On s'aperçoit cependant que plus la distance de pénétration d augmente, plus l'amplitude du couple de positionnement Ca devient importante, en même temps qu'on déplace angulairement la position d'équilibre stable. Il s'agit donc de trouver un compromis entre un couple de positionnement pas trop élevé et une marche arrière qui soit de fonctionnement sûr. Ce compromis peut être trouvé soit en adoptant une fois pour toutes des cotes de construction convenables soit en prévoyant un système de réglage fin de la longueur de pénétration d comme cela apparaît aux figures 1a, 1b et 2. Dans ce dernier cas, il est possible d'ajuster la pénétration de l'élément magnétique 12 en vissant plus ou moins la partie 29 de la tige qui porte le filet 15 dans le taraudage de l'élément de butée 17. Quoiqu'il en soit, on comprendra qu'on peut s'accommoder d'un couple de positionnement en marche arrière qui soit plus faible que celui qui se présente en marche avant puisque la marche arrière est utilisée avant tout pour apporter des corrections à l'indication de l'heure et qu'à ce moment-là il est peu probable que la montre subisse des chocs.

De la description qui vient d'être donnée d'un exemple de la réalisation de l'invention, on se rend compte qu'il a été mis en oeuvre des moyens très simples et très peu encombrants pour adjoindre à un moteur pas à pas pour montre la marche arrière qui sera utilisée pour corriger l'heure et ceci, par exemple, dans les cas où la montre avance et dans laquelle il n'est pas prévu de dispositif pour arrêter son mécanisme.

Le dispositif décrit qui consiste essentiellement à projeter un élément magnétique dans l'entrefer du moteur pour modifier la distribution ou le chemin du flux magnétique et inverser le sens de rotation du rotor n'est pas limité à ce qui vient d'être décrit. Par exemple la géométrie de l'entrefer pourrait être différente de celle présentée aux figures et présenter, au lieu des zones saturables 7 et 8, des entrefers séparant les pièces polaires 5 et 6 ou encore d'autres découpages que ceux présentés par les encoches 9 et 10, par exemple une seule encoche, ou des méplats. Si les figures 1a, 1b et 2 montrent une tige dont l'axe coupe l'axe 4 du rotor et lui est perpendiculaire, l'élément magnétique 12 pénétrant dans l'entrefer par le fond de l'encoche 10, on pourrait aussi imaginer que ledit élément 12 pénètre dans l'entrefer 3 d'une manière qui lui soit tangentielle ou sous un angle quelconque, si cette façon de faire facilite la mise en place du dispositif.

Pour des raisons évidentes d'économie de place en épaisseur, la partie 23 de la tige traverse la tranche de la pièce polaire 6 dans l'ouverture 25. Cependant, la partie 23 pourrait aussi être superposée à la pièce polaire 6. Dans ce cas, l'élément magnétique 12 pourrait prendre la forme d'une palette plongeant dans l'entrefer 3, laquelle, dans la position de repos, serait escamotée dans la pièce polaire 6 et, dans la position de travail, serait projetée à l'intérieur de l'entrefer 3.

En plus de la fonction qui vient d'être décrite, la couronne-poussoir 14 pourrait servir à remplir d'autres fonctions, par exemple à avancer ou à retarder l'aiguille des heures d'un ou de plusieurs fuseaux horaires ou à être couplée à des contacts électriques qui permettraient l'avance ou le recul des aiguilles suivant le sens de rotation de ladite couronne.

Enfin, on comprendra qu'il est loisible de munir l'organe de commande 13 d'un dispositif de blocage qui empêche un actionnement intempestif du dispositif d'inversion de marche.

Tout à fait généralement, le moteur objet de l'invention possède un stator qui porte en lui-même les moyens nécessaires à créer un couple de positionnement. Dans l'exemple des figures, ces moyens sont constitués par les encoches 9 et 10. Ce pourrait aussi être des pôles excentrés comme cela est connu de l'état de la technique. Un dispositif magnéto-mécanique, lorsqu'il est actionné, vient déplacer l'endroit où s'exerce ce couple de positionnement pour inverser ainsi le sens normal de rotation du rotor.

Revendications

1. Micromoteur rotatif pas à pas (1) pour pièce d'horlogerie comprenant un noyau magnétique, une bobine entourant ce noyau, un stator couplé magnétiquement audit noyau, ledit stator comportant deux pièces polaires (5, 6) séparées ou faites d'une pièce, un rotor aimanté (2) embrassé par les pièces polaires et présentant au moins une paire de pôles (N - S) diamétralement opposés, un entrefer (3) séparant lesdites pièces polaires dudit rotor et un dispositif magnéto-mécanique (11) pour inverser le sens de rotation du rotor, caractérisé par le fait que ledit dispositif magnéto-mécanique comporte un élément magnétique (12) susceptible de pénétrer à l'intérieur de l'entrefer pour modifier l'angle de positionnement dudit rotor et inverser son sens de rotation lorsque la bobine est alimentée par des impulsions de commande.

2. Micromoteur selon la revendication 1, caractérisé par le fait que le dispositif magnéto-mécanique (11) comporte en outre un organe de commande (13) accessible de l'extérieur de la pièce d'horlogerie et actionnable manuellement.

3. Micromoteur selon la revendication 1, caractérisé par le fait que l'entrefer (3) comporte en outre deux encoches (9, 10) diamétralement opposées et pratiquées dans le bord intérieur des pièces polaires (5, 6) et que l'élément magnétique (12) est arrangé pour pénétrer dans l'entrefer par le fond de l'une desdites encoches.

4. Micromoteur selon la revendication 2, caractérisé par le fait que l'organe de commande (13) est une tige (21, 23, 29) pouvant coulisser dans le sens de sa longueur et supportant à sa première extrémité l'élément magnétique (12) et à sa seconde extrémité un poussoir (14) sur lequel peut s'exercer une action manuelle.

5. Micromoteur selon la revendication 4, caractérisé par le fait que la tige (21, 23, 29) peut être amenée d'une première position de repos à une seconde position de travail à l'encontre de la force de rappel d'un ressort (26), qu'en première position l'élément magnétique (12) affleure ou est en retrait de l'entrefer (3) et qu'en seconde position ledit élément se trouve projeté à l'intérieur dudit entrefer.

6. Micromoteur selon la revendication 4, caractérisé par le fait que la tige (21, 23, 29) coulisse selon un axe qui coupe l'axe (4) du rotor et qui lui est perpendiculaire.

7. Micromoteur selon la revendication 4, caractérisé par le fait qu'une partie (23) de la tige (21, 23, 29) coulisse dans une ouverture (25) pratiquée dans l'épaisseur d'une des pièces polaires (6) du stator.

FIG.1a

FIG.1b

**FIG.2**

FIG.3

0083034

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,Y | CH-A- 613 349 (K.K. DAINI SEIKOSHA) <br> * Revendications; page 3, colonne de droite, ligne 50 - page 4, colonne de droite, ligne 9; figures * | 1 | G 04 C 13/11 <br> H 02 K 37/00 |
| Y | FR-A-2 402 340 (EBAUCHES) <br> * Figure 7; page 6, lignes 24-26 * | 1-7 | |
| A | DE-A-2 427 742 (GEBR. JUNGHANS) <br> * En entier * | 1-7 | |
| D,A | DE-B-1 006 806 (SIEMENS UND HALSKE) <br> * En entier * | 1 | |

DOMAINES TECHNIQUES RECHERCHES (Int. Cl. ³)

G 04 C
H 02 K

Le présent rapport de recherche a été établi pour toutes les revendications

| Lieu de la recherche | Date d'achèvement de la recherche | Examinateur |
|---|---|---|
| LA HAYE | 24-03-1983 | DEVINE J.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82